# EUROPEAN PATENT SPECIFICATION

(11) **EP 3 750 409 B1**
(45) Date of publication and mention of the grant of the patent: **10.07.2024**
(21) Application number: 20179035.9
(22) Date of filing: 09.06.2020
(51) Int. Cl.: A23L 11/70, C12F 3/06, A23K 10/38, A23L 7/20, A23L 3/22

(54) **A METHOD FOR REDUCING AN AMOUNT OF MICROORGANISMS IN BREWERS SPENT GRAINS**
VERFAHREN ZUR REDUZIERUNG EINER MENGE VON MIKROORGANISMEN IN TREBER
PROCÉDÉ DE RÉDUCTION D'UNE QUANTITÉ DE MICRO-ORGANISMES DANS DES DRÊCHES DE BRASSERIE

(30) Priority: 14.06.2019 EP 19180204
(43) Date of publication of application: 16.12.2020
(73) Proprietor: Tetra Laval Holdings & Finance S.A., 1009 Pully (CH)
(72) Inventor: BÖRJESSON, Erik, 227 32 Lund (SE); REWOLLE, Bodo, 21620 Malmö (SE); STRÖM, Ola, 234 36 Bjärred (SE); STANIC, Mirko, 8044 Zürich (CH)
(74) Representative: Tetra Pak - Patent Attorneys SE

(56) References cited:
- EP-A1- 3 284 348
- EP-A2- 0 852 911
- WO-A1-2018/202799
- WO-A1-2019/023647
- US-A- 4 234 537
- US-A- 5 439 701

## Description

### Technical Field

The invention relates to a method for reducing an amount of microorganisms in brewers spent grains.

### Background Art

Brewers spent grains (BSG) is a by-product from the brewing industry. The BSG comprises starch sources such as barley grains used to brew beer. A produced amount of the BSG for each 100 liter beer may be about 15 Kg. The BSG contains proteins, fibers, and carbohydrates. Although the BSG is a nutritious source, it is microbiologically unstable as it is typically contaminated with pathogenic microorganisms such as Bacillus Cereus and Enterobacteriaceae. Therefore, the BSG rapidly degrades and spoils within about 24 hours which makes it difficult to trade or use at all. Today, breweries pay a fee to waste treatment for each kilogram of the BSG that they produce and the BSG is mainly used as animal feed or in biogas installations.

US5439701A is related to fiber-containing food product and process for producing it from a portion of by-product of alcohol production process. According to one example of this document: 100 grams of brewers' grains, containing 50% wt. of moisture, was mixed with 100 grams of brewers' cream yeast, and 400 grams of water was added to the mixture. A sufficient amount of sodium hydroxide was added to adjust pH to 8.5, and the mixture was held for 12 hours at 160 DEG F. Thereafter, water was removed through evaporation over approximately 4 hours to obtain 30% solids content in the mixture. The starting temperature of the evaporating step was 212 DEG F. at a pressure of 11/2 inches of mercury and the ending temperature 130 DEG F. at a pressure of 26 inches of mercury. The viscous product was transferred into an aluminum pan and dried in a convection oven (from General Signal Co., Linberg/Blue M) at 200 DEG F. until moisture level of less than 10% wt. was reached. The resulting product had yeast-type flavor.

WO2019023647A1 is related to extract protein from spent grains. It discloses that the extraction of protein from the BSG may include preparing the BSG by controlling the temperature in a hot grain storage system and in some cases dewatering the BSG to acceptable moisture content levels. In extracting the protein rich and fiber rich flour, the BSG is conveyed to a device that dries, mills, and fractionates the BSG into separated protein and fiber extract.

EP3284348A1 is related to use of a component obtained by the fermentation of brewer's spent grain for preparing a beverage or beverage component. It discloses that the BSG is highly nutritious and very sensitive for spoilage by microorganisms, hence heat treating of the BSG is desired to increase the shelf life. In this sense, the high water content of BSGs in the moment of their production (wort filtration), which is in the range of 75% (25% total solids), increases the instability of the material. For this reasons preferably fresh spent grains are used in the process of the present invention, and/or BSGs are stabilized or treated for sterilization, preferably by boiling.

US4234537A is related to sterilization of particulate solid materials. It discloses that a batch process for the sterilization of particulate solid materials, in which a batch of particulate solid material to be sterilized is introduced into a rotary vessel shaped so that rotation of the vessel imparts a tumbling action to the solid material; the solid material is heated in the vessel while rotating the same to subject the material to a tumbling action; a lubricant liquid is injected under pressure into the vessel at a temperature in excess of the temperature of the solids; the lubricant liquid and solid material are held at a sterilization temperature while maintaining the tumbling action; and the sterilized solid material is withdrawn from the vessel under aseptic conditions.

WO2018202799A1 is related to a process for producing a filler from brewer's spent grain. It discloses that the process comprises a) comminuting the brewer's spent grain, b) heating the brewer's spent grain, c) optionally, fermenting the brewer's spent grain, d) optionally, reducing the moisture content of the brewer's spent grain, and e) optionally, mixing the brewer's spent grain with at least one flavor-modifying food additive, such as a sugar substitute(s) and/or an aroma. The heating of the brewer's spent grain in step b) serves for the decontamination and therefore the elimination of in particular pathogenic germs and organisms responsible for spoilage.

EP0852911A2 is related to a method for preparing a particulate product from spent grains. It discloses that beer is traditionally made from germinated barley (malt), raw grain, water and yeast. The germinated barley is first ground to sufficiently expose the endosperm without grinding the husks too finely in consideration of the fact that they are to be removed later to serve as filter aid at the subsequent filtering. Normally, grinding is carried out to an average particle size of from only a few 1/10 mm to a few mm, preferably to a particle size of 1-3 mm.

Therefore there is a need to preserve nutrients of the BSG and to make it a nutrition, instead of a costly undesired waste product. In particular, there is a need to make the BSG a human nutrition.

### Summary

It is an object of the invention to at least partly overcome one or more of the above-identified limitations of the prior art. In particular, it is an object to provide a method to reduce an amount of microorganisms in the BSG.

According to the present inventive concept there is provided a method for reducing an amount of microorganisms in the BSG according to claim 1.

The method is advantageous in that it allows reducing the amount of microorganisms such as Bacillus Cereus and Enterobacteriaceae in the BSG and thereby allows it to be used as human nutrition i.e. an ingredient in the food industry. The method in turn allows to reduce waste products of the beer brewing by making the BSG into a human nutrition instead of the costly waste product. Thereby the method is economically and environmentally advantageous.

The BSG is a rather dry product which is not suitable for feeding into the heat exchanger. The mixing, by means of the mixing arrangement, of the BSG and the liquid allows to disperse the BSG to be able to feed that into the heat exchanger. The mixing, by means of the mixing arrangement, of the BSG and the liquid further allows to form an even mixture i.e. a homogeneous mixture. The method is also advantageous in that it allows a continuous process and does not require any chemical agent. The heating of the mixture may be performed using conventional Ultra High Temperature (UHT) processing techniques, including allowing a heat recovery. The heating of the mixture may be performed using an indirect heating process such that the BSG is not directly exposed to the heating media. For instance, the heating of the mixture may be performed using a tubular heat exchanger. The tubular heat exchanger may provide optimal performance, long production time and low maintenance costs.

By reducing the amount of microorganisms in the BSG is hereby meant removing, killing or deactivating at least 90%, or at least 99%, of living microorganisms in the BSG.

By the mixing arrangement is hereby meant any unit that is capable of dispersing BSG in water.

The predetermined temperature is in a range of 127 to 140 °C. The predetermined temperature may preferably be in a range of 133 to 138 °C. The optimal predetermined temperature may be 137 °C.

The predetermined period of time is in a range of 30 to 90 seconds. The predetermined period of time may preferably be in a range of 40 to 80 seconds. The predetermined period of time may more preferably be in a range of 55 to 65 seconds. The optimal predetermined period of time may be 60 seconds.

The above predetermined time and temperature ranges may provide sufficient heating to reduce the amount of microorganisms in the BSG. The predetermined temperature may scale inversely with the predetermined time such the heating at a higher temperature may require a shorter time.

A solid content of the BSG may be in a range of 20% to 40% by weight of the BSG. The solid content of the BSG may preferably be in a range of 20% to 30% by weight of the BSG. The solid content of the BSG may more preferably be in a range of 20% to 25% by weight of the BSG. The range may depend on the starch source used for brewing beer and may therefore depend on the starch source material.

The feeding comprises feeding the liquid and the BSG such that a solid content of the mixture is in a range of 11% to 17% by weight of the mixture. The optimal solid content of the mixture may be 17% by weight of the mixture. This range may provide a sufficient fluidity and concentration to feed the mixture into the heat exchanger. Thereby this range may result into processing a highest amount of the solid BSG which may be reduced according to the above mentioned method.

The mixing of the liquid and the BSG may comprise agitating, by means of an agitator, the liquid and the BSG. Thereby the agitating, by means of the agitator, may improve the homogeneity of the mixture. This may in turn facilitate the feeding of the mixture into the heat exchanger and heating of the mixture to reduce the amount of the microorganisms therein.

The mixing of the liquid and the BSG may comprise circulating, by means of a circulating loop, the mixture out of and into the mixing arrangement, such that the formation of the mixture is facilitated. The circulating of the mixture out of the mixing arrangement may be performed from a bottom portion of the mixing arrangement into a top portion of the mixing arrangement. This may in turn reduce a risk of sedimentation. The circulating, by means of the circulation loop, may further improve the homogeneity of the mixture. The circulating may be performed initially to speed up the formation of the homogeneous mixture and to facilitate stabilizing of the mixture.

The circulating may comprise pumping, by means of a screw pump, the mixture. An advantage brought by the screw pump is that the screw pump may facilitate the pumping of the mixture. The screw pump may pump the mixture out of the mixing arrangement via a slit arranged at the bottom of the mixing arrangement. The pumped mixture may be circulated into the mixing arrangement via the circulation loop to facilitate the formation of the homogeneous mixture.

The method may further comprise introducing a viscosity increasing agent into the liquid and the BSG, such that a viscosity of the mixture is increased. Increased viscosity facilitates more even dispersion of the BSG in the liquid as well as reduces the risk of BSG sedimentation.

The liquid may be water. The liquid may be water only. The liquid may comprise at least 99% water.

The feeding of the mixture into the heat exchanger may comprise pumping the mixture by means of a screw pump. The same screw pump that may be used for pumping the mixture out of the mixing arrangement into the circulation loop may be used to feed the mixture into the heat exchanger. The pumping of the mixture into the heat exchanger may be performed subsequent to the circulating of the mixture.

The feeding of the BSG and the liquid into the mixing arrangement may further comprise determining a weight of the BSG being fed into the mixing arrangement and feeding an amount of the liquid based on the determined weight of the BSG. Thereby, the weight of the BSG being fed into the mixing arrangement may be determined, as the BSG weight may depend e.g. types of grains used in the brewing industry. The determining of the weight of the BSG may hence facilitate adjusting the solid content of the mixture i.e. the BSG to the liquid ratio.

The method may further comprise, subsequent to the heating of the mixture, drying the mixture to form a dried BSG product and grinding the dried BSG product to form a flour. Thereby, the flour may be used as human nutrition i.e. an ingredient in the food industry. The drying of the mixture may be performed using any conventional drying techniques including e.g. belt pressing and evaporation. The grinding of the BSG product may be performed using any conventional grinding techniques.

By drying is hereby meant removal or separation of the major part of liquid in the mixture, allowing the BSG to be grinded to flour. The dried BSG and thus also grinded BSG still have a minor liquid content.

The BSG is originated from seeds or grains chosen from a group consisting of barley, wheat, rye, corn, rice, oats and combinations thereof. The BSG may comprise any other grains used in the brewing industry. In case of forming the flour, by drying and grinding of the dried BSG product, the formed flour may have various nutrients depending on the grains used in the brewing industry and may hence provide various flours i.e. various ingredients to the food industry.

The BSG may comprise particles having a dimension in a range from 100-4000 µm. The dimension of the particles may vary depending on the grains used in the brewing industry.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is an schematic illustration of an arrangement capable of reducing an amount of microorganisms in BSG (not part of the invention).
Fig. 2 is a block scheme of a method for reducing an amount of microorganisms in BSG.
Fig. 3 is a block scheme of a method for brewing beer (not part of the invention).

### Detailed Description

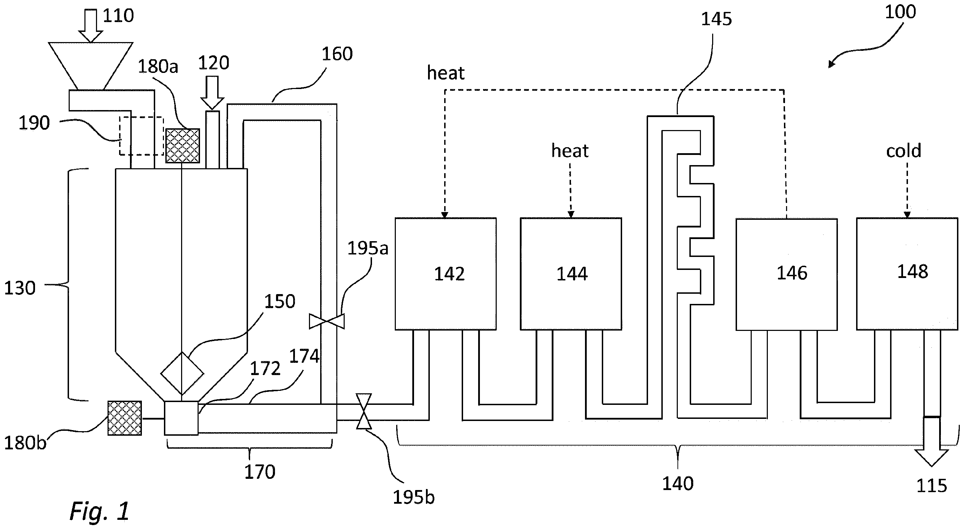

With reference to Fig. 1 an arrangement 100 (not part of the invention) is illustrated. The arrangement 100 may be used to reduce an amount of microorganisms in BSG 110. The arrangement 100 may be installed next to a brewing facility such that the produced BSG 110 from beer brewing may directly be fed into the arrangement 100.

In the following the BSG 110 and the arrangement 100 in relation to reducing an amount of microorganisms in the BSG 110 will be described.

The BSG 110 may originate from any grains or seeds used in brewing industry. The BSG 110 may originate from barley, wheat, rye, corn, rice, oats and combinations thereof. The BSG 110 may be in a form of ground malt. The BSG 110 may comprise water. The BSG 110 may have a pH of 6.7-6.9. The BSG 110 may be comprise particles a dimension in a range from 100-4000 µm. As an example, the dimension of the BSG particles may be distributed, as follows: below 160 µm (d₁₀), between 950 to 1650 µm (d₅₀), 2900 µm (d₉₀) and 4000 µm (dₘₐₓ). A solid content (SC) of the BSG 110 may be in a range from 20% to 40% by weight of the BSG 110. The BSG 110 may have a water content of 73-82%. Still, the BSG 110 may be rather solid i.e. show no pronounced flowability, no bridging, and no free water. A bulk density of the BSG 110 may be 0.4-0.5 g/ml.

The arrangement 100 may comprise a mixing arrangement 130 and a heat exchanger 140. The general function of the mixing arrangement 130 is mixing and the general function of the heater exchanger 140 is heating.

The mixing arrangement 130 may be a dispersion tank. A volume of the dispersion tank may as an example be 1500 liter. Fig. 1 shows that the mixing arrangement 130 has two inlets. One inlet may be used to feed a liquid 120 and one inlet may be used to feed the BSG 110 into the mixing arrangement 130. The liquid 120 may be water.

The mixing arrangement 130 may have more than two inlets. For instance, mixing arrangement 130 may have a third inlet to feed a viscosity increasing agent into the liquid 120. Alternatively, the viscosity increasing agent may be introduced into the liquid 120. The viscosity increasing agent may increase a viscosity of the mixture.

A weight of the BSG 110 being fed into the mixing arrangement 130 may be determined, by means of a sensor 190. The sensor 190 may be any suitable conventional sensor arranged such that the weight of the BSG 110 may be determined while feeding the BSG 110 into the mixing arrangement 130, i.e. continuous in-line determination. Alternatively, the BSG 110 may be weighted prior to feeding the BSG 110 into the mixing arrangement 130. An amount of the liquid 120, based on the determined weight of the BSG 110, may be fed into the mixing arrangement 130. The feeding of the liquid 120 and the BSG 110 may be performed such that a solid content of the mixture may be in a range of 10% to 20% by weight of the mixture. The mixing arrangement 130 may mix the BSG 110 and the liquid 120 to form an even and a homogeneous mixture.

The mixing arrangement 130 may further comprise an agitator 150. The agitator 150 may include a propeller, a screw or similar. The mixing arrangement 130 may comprise more than one agitator 150. The agitator 150 may agitate the BSG 110 and the liquid 120. Fig. 1 shows that the agitator 150 is arranged at a bottom portion of the mixing arrangement 130. The agitator 150 may be arranged anywhere in the mixing arrangement 130 e.g. at a middle portion. Fig. 1 shows that the agitator 150 is connected to a motor 180a. Fig .1 shows that the motor 180a, connected to the agitator 150, is arranged above the mixing arrangement 130. The motor 180a may provide mechanical energy to agitate the agitator 150.

The mixing arrangement 130 may further comprise a circulation loop 160, shown in Fig. 1. The mixing arrangement 130 may comprise more than one circulation loop 160. The mixture may be circulated by means of the circulation loop 160. The circulation loop 160 may connect a bottom portion of the mixing arrangement 130 to a top portion of the mixing arrangement 130. The circulation loop 160 may circulate the mixture out of the bottom portion of the mixing arrangement 130 into the top portion of the mixing arrangement 130. The circulation loop 160 may facilitate the formation of the mixture.

The mixing arrangement 130 may further comprise a slit arranged at the bottom portion of the mixing arrangement 130. The slit may have a circular cross section. The slit may be connected to a screw pump 170. The slit may be connected to a feed screw 172 of the screw pump 170. The feed screw 172 may have an opening facing the slit of the mixing arrangement 130. The opening of the feed screw 172 may have the shape and same size as the slit. The mixture may exit the slit and enter feed screw 172 such that no mixture may remain at an interface between the slit and the feed screw 172. The feed screw 172 may be connected to a motor 180b, as shown in Fig. 1. The motor 180b may provide mechanical energy to the feed screw 172 to pump the mixture from the mixing arrangement 130 into the feed screw 172. The screw pump 170 may further comprise a pump screw executer 174. The feed screw 172 and the pump screw executer 174 may be arranged on the same shaft so as to co-rotate. The motor 180b may hence provide mechanical energy to the pump screw executer 174. The mixture may flow from the feed screw 172 into the pump screw executer 174. The pump screw executer 174 may be connected to the circulation loop 160. The circulating of the mixture into the circulation loop 160 may comprise pumping, by means of the screw pump 170, the mixture. The mixture may flow from the feed screw 172 into the pump screw executer 174 and then into the circulation loop 160. The flow of the mixture from the pump screw executer 174 into the circulation loop 160 may be controlled by means of a valve 195a. The valve 195a may be open initially to speed up the formation of the homogeneous mixture. The valve 195a may be closed after the stabilization of the mixture. A volume of the mixture after stabilization may as an example be 700 liters.

Fig. 1 also shows that the pump screw executer 174 of the screw pump 170 is connected to the heat exchanger 140. The feeding of the mixture into the heat exchanger 140 may comprise pumping, by means of the screw pump 170, the mixture into the heat exchanger 140. The flow of the mixture from the pump screw executer 174 into the heat exchanger 140 may be controlled by means of another valve 195b. The valve 195b of the heat exchanger 140 may be closed initially i.e. when the valve 195a of the circulation loop 160 is open. The valve 195b of the heat exchanger 140 may be open after the mixture has stabilized. The valve 195b of the heat exchanger 140 may be open when the valve 195a of the circulation loop 160 is closed.

Still with reference to Fig. 1, in the following the heater exchanger 140 and the flow of the mixture in the heat exchanger 140 will be described. Fig.1 shows schematic illustration of a tube type heat exchanger 140. The heating of the mixture may be performed using plate type heat exchanger or any other type of suitable heat exchanger.

The heat exchanger 140 may comprise several parts or portions serving different purposes or the same purposes. The heat exchanger 140 may comprise a preheater 142. The heat exchanger 140 may comprise one or more final heaters 144. Fig. 1 shows only one final heater 144. However, two or more number of final heaters 144 may be connected in series with the final heater 144. The two or more number of the final heaters 144 may be arranged such that they may be connected to or disconnected from the mixture being feed into the heat exchanger 140. The two or more number of the final heaters 144 may increase an area of the heat exchanger 140 and consequently increase an amount of heat transfer.

The heat exchanger 140 may comprise a holding tube 145. The holding tube 145 may comprise corrugated or winding tubes. The holding tube 145 serves the purpose of maintain the mixture being feed into the heat exchanger 140 at a certain temperature for a certain time. The heat exchanger 140 may further comprise a regeneration cooler 146 and a final cooler 148. Fig. 1 shows one regeneration cooler 146 and one final cooler 148. However, there may be more than one regeneration cooler 146 and more than one final cooler 148.

As stated above, after the mixture has been stabilized, the valve 195b of the heat exchanger 140 connected to the pump screw executer 174 may be open. The mixture may hence flow from the pump screw executer 174 into the preheater 142. The BSG 110 and the liquid 120 are continuously and proportionally fed into mixing arrangement 130 to keep a continuous supply of the mixture. In other words, the BSG 110 and the liquid 120 are continuously fed into the mixing arrangement 130 while the mixture is passing through the heater exchanger 140 i.e. being heated in the heater exchanger 140, as this is a continuous process. The preheater 142 may preheat the mixture for to a temperature of 70 °C. After the mixture has been preheated, by means of the preheater, the mixture may be sent to the final heater(s) 144. The mixture may be heated at a predetermined temperature at the final heater 144. The final heater 144 may be indirectly heated by a steam flow. Fig. 1 shows the steam flow by the dashed-line arrow above the final heater 144. The predetermined temperature may be in a range of 127 to 140°C. The optimal predetermined temperature may be 137 °C. After heating of the mixture at the predetermined temperature, the mixture flows into the holding tube 145. The mixture then passes the holding tube 145 which has a length that is chosen such that the passing takes a predetermined period of time. The predetermined period of time may be in a range of 30 to 90 seconds. The optimal predetermined period of time may be 60 seconds. The mixture may then be sent to the regeneration cooler 146. The regeneration cooler 146 may decrease the temperature of the mixture. There may be a heat recovery between the preheater 142 and the regeneration cooler 146. The heat recovery between the preheater 142 and the regeneration cooler 146 is shown by dashed-line in Fig. 1. The mixture may next be sent to the final cooler 148. The final cooler 148 may further decrease the temperature of the mixture. The final cooler may be indirectly cooled by cooling water. Fig. 1 shows the cooling water by the dashed-line arrow above the final cooler 144. The mixture may then be sent out via an outlet 115. The temperature of the mixture leaving the final cooler 148 may be 80 °C.

Subsequent to heating of the mixture, by means of the heating exchanger 140, the mixture may be dried. The mixture may be dried to form a dried BSG product. The drying may be done via a drier connected to the outlet 115 such that the heated mixture, the mixture exiting the outlet 115, may be fed into the drier (not shown in Fig. 1). The drier may be any type of conventional drier including e.g. a belt press drier. The drier reduces the amount of water or liquid from the heated mixture to form the dried BSG product. The dried BSG product may be ground to form a flour. The grinding of the dried BSG product may be performed using any conventional grinder or mill (not shown in Fig. 1). The flour may be packed and provided to the food industry. The flour may be used as ingredient in the food industry. Depending on the type of raw grains used in the brewing industry, various flour types may be provided to the food industry.

In the above, the arrangement 100 is described in relation to reducing an amount of microorganism in the BSG 110. However, the arrangement 100 is not limited to reducing an amount of microorganism in the BSG 110 and may be used to reduce an amount of microorganism in other malted kernels as well.

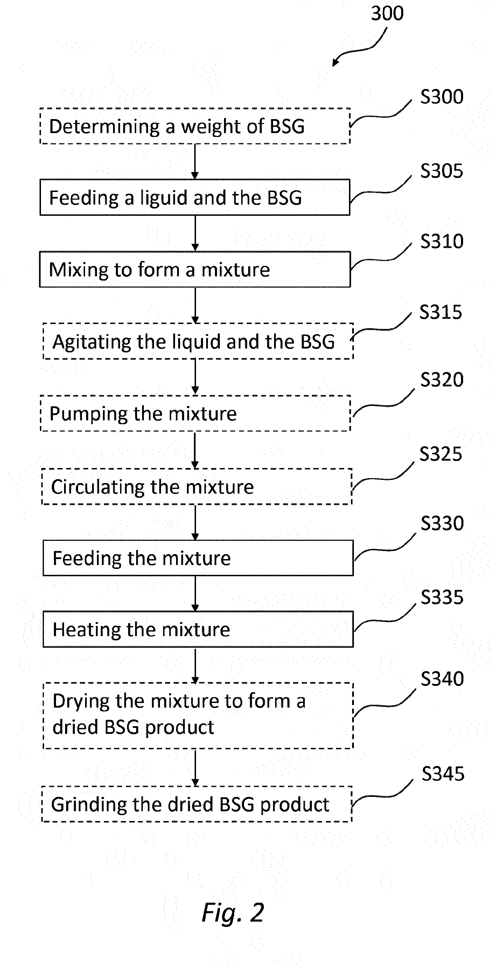

With reference to Fig. 2, a block scheme of a method 300 for reducing an amount of microorganisms in BSG 110 is illustrated. The method comprises the following steps.

The method 300 may comprise determining S300 a weight of the BSG 110 being fed into a mixing arrangement 130. The mixing arrangement 130 may be configured, as described above. The determination of the BSG 110 weight may be performed using a sensor 190, as described above.

The method 300 further comprises feeding S305 a liquid 120 and the BSG 110 into a mixing arrangement 130. The feeding S305 of the liquid 120 may comprise feeding an amount of the liquid 120 based on the determined weight of the BSG 110 being fed into the mixing arrangement 130. The liquid 120 may be as described above.

The method 300 further comprise mixing S310, by means of the mixing arrangement 130, the liquid 120 and the BSG 110 to form a mixture.

The mixing S310 may further comprise agitating S315, by means of an agitator 150, the liquid 120 and the BSG 110. The agitator 150 may be configured, as described above.

The method 300 may further comprise pumping S320, by means of a screw pump 170, the mixture. The screw pump 170 may be configure, as described above.

The mixing S310 may further comprise circulating S325, by means of a circulation loop 160, the mixture out of and into the mixing arrangement 130, such that the formation of the mixture is facilitated. The circulation loop 160 may be configured, as described above. The circulating S325 may comprise pumping S320, by means of the screw pump 170, the mixture.

The method 300 further comprises feeding S330 the mixture into a heat exchanger 140. The heat exchanger 140 may be configured as described above. The feeding S330 of the mixture into the heat exchanger 140 may comprise pumping S320, by means of a screw pump 170, the mixture. The screw pump 170 may be the same screw pump 170, as described above.

The method 300 further comprises heating S335, by means of the heat exchanger 140, the mixture for a predetermined time at a predetermined temperature such that the amount of microorganisms in the BSG 110 is reduced. The predetermined time and the predetermined temperature may be as described above.

The method 300 may further comprise, subsequent to heating S335 of the mixture, drying S340 the mixture to form a dried BSG product. The drying S340 may be performed as described above.

The method 300 may further comprise grinding S345 the dried BSG product to form a flour. The grinding S345 may be performed as described above.

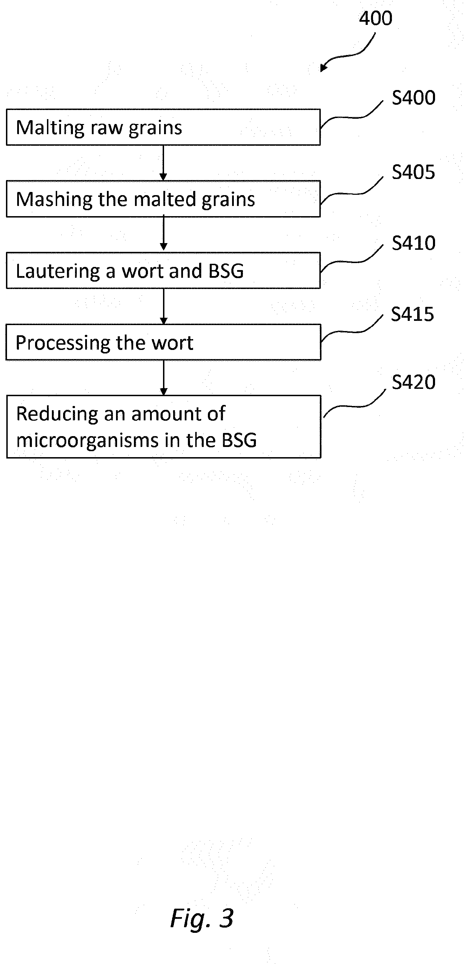

With reference to Fig. 3, a block scheme of a method 400 (not part of the invention) for brewing beer is illustrated. The method comprises the following steps.

The method 400 comprises malting S400 raw grains 430. The raw grains may originate from any of barley, wheat, rye, corn, rice, oats and combinations thereof. The malting S400 may be performed in a manner which per se is known in the beer brewing industry.

The method 400 further comprises mashing S405 the malted grains 430 such that wort 230 and BSG 110 are formed. The mashing S405 may be performed in a manner which per se is known in the beer brewing industry.

The method 400 further comprises lautering S410 the wort 230 and the BSG 110 such that the wort 230 and the BSG 110 are separated. The lautering S410 may be performed in a manner which per se is known in the beer brewing industry.

The method 400 further comprises processing S415 the wort 230 to produce beer 240. The processing S415 of the wort 230 may be performed in a manner which per se is known in the beer brewing industry.

The method 400 further comprises reducing S420 an amount of microorganisms in the BSG 110 according to the method 300 described in connection with Fig. 2.

## Claims

1. A method (300) for reducing an amount of microorganisms in brewers spent grains, BSG, the method comprising:
feeding (S305) a liquid and the BSG into a mixing arrangement,
mixing (S310), by means of the mixing arrangement, the liquid and the BSG to form a mixture,
feeding (S330) the mixture into a heat exchanger, and
heating (S335), by means of the heat exchanger, the mixture for a predetermined period of time in a range of 30 to 90 seconds at a predetermined temperature in a range of 127 to 140°C such that the amount of microorganisms in the BSG is reduced, wherein
the feeding (S305) comprises feeding the liquid and the BSG into the mixing arrangement such that the solid content of the mixture is in a range of 11% to 17% by weight of the mixture,
the BSG and the liquid is continuously fed into the mixing arrangement while the mixture is passing through the heat exchanger, as this is a continuous process.

2. The method (300) according to any one of claims 1-3, wherein a solid content of the BSG is in a range of 20% to 40% by weight of the BSG.

3. The method (300) according to claim 1 or 2, wherein the mixing (S310) of the liquid and the BSG comprises agitating (S315), by means of an agitator, the liquid and the BSG.

4. The method (300) according to any one of claims 1-3, wherein the mixing (S310) of the liquid and the BSG comprises circulating (S325), by means of a circulating loop, the mixture out of and into the mixing arrangement, such that the formation of the mixture is facilitated.

5. The method (300) according to claim 4, wherein the circulating (S325) comprises pumping (S320), by means of a screw pump, the mixture.

6. The method (300) according to any one of claims 1-5, further comprising introducing a viscosity increasing agent into the liquid and the BSG, such that a viscosity of the mixture is increased.

7. The method (300) according to any one of claims 1-6, wherein the liquid is water.

8. The method (300) according to any one of claims 1-7, wherein the feeding (S330) of the mixture into the heat exchanger comprises pumping (S320), by means of a screw pump, the mixture.

9. The method (300) according to any one of claims 1-8, wherein the feeding (S305) of the BSG and the liquid into the mixing arrangement further comprises determining (S300) a weight of the BSG being fed into the mixing arrangement and feeding (S305) an amount of the liquid based on the determined weight of the BSG.

10. The method (300) according to any one of claims 1-9, further comprising, subsequent to heating of the mixture,
drying (S340) the mixture to form a dried BSG product, and
grinding (S345) the dried BSG product to form a flour.

11. The method (300) according to any one of claims 1-10, wherein the BSG is originated from seeds chosen from a group consisting of barley, wheat, rye, corn, rice, oats and combinations thereof.

12. The method (300) according to any one of claims 1-11, wherein the BSG comprises particles having a dimension in a range from 100-4000 µm.

## Patentansprüche

1. Verfahren (300) zur Reduzierung einer Menge von Mikroorganismen in Treber, BSG, wobei das Verfahren umfasst:
Einspeisen (S305) einer Flüssigkeit und des BSGs in eine Mischanordnung,
Mischen (S310) der Flüssigkeit und des BSGs mittels der Mischanordnung, um eine Mischung zu bilden,
Einspeisen (S330) der Mischung in einen Wärmetauscher, und
Erwärmen (S335) der Mischung für einen vorbestimmten Zeitraum im Bereich von 30 bis 90 Sekunden auf eine vorbestimmte Temperatur in einem Bereich von 127 bis 140 °C mittels des Wärmetauschers, so dass die Menge an Mikroorganismen in dem BSG reduziert wird, wobei
das Einspeisen (S305) Einspeisen der Flüssigkeit und des BSGs in die Mischanordnung umfasst, so dass der Feststoffgehalt der Mischung in einem Bereich von 11 Gew.% bis 17 Gew.% der Mischung liegt,
der BSG und die Flüssigkeit kontinuierlich in die Mischanordnung eingespeist werden, während die Mischung den Wärmetauscher durchläuft, da es sich hier um einen kontinuierlichen Prozess handelt.

2. Verfahren (300) nach einem der Ansprüche 1 bis 3, wobei ein Feststoffgehalt des BSGs in einem Bereich von 20 Gew.% bis 40 Gew.% des BSGs liegt.

3. Verfahren (300) nach Anspruch 1 oder 2, wobei das Mischen (S310) der Flüssigkeit und des BSGs Rühren (S315) der Flüssigkeit und des BSGs mittels eines Rührwerks umfasst.

4. Verfahren (300) nach einem der Ansprüche 1 bis 3, wobei das Mischen (S310) der Flüssigkeit und des BSGs Umwälzen (S325) der Mischung aus der Mischanordnung heraus und in diese hinein mittels einer Umwälzschleife umfasst, so dass die Bildung der Mischung erleichtert wird.

5. Verfahren (300) nach Anspruch 4, wobei das Umwälzen (S325) Pumpen (S320) der Mischung mittels einer Schneckenpumpe umfasst.

6. Verfahren (300) nach einem der Ansprüche 1 bis 5, des Weiteren umfassend Einbringen eines Viskositätserhöhungsmittels in die Flüssigkeit und den BSG, so dass eine Viskosität der Mischung erhöht wird.

7. Verfahren (300) nach einem der Ansprüche 1 bis 6, wobei die Flüssigkeit Wasser ist.

8. Verfahren (300) nach einem der Ansprüche 1 bis 7, wobei das Einspeisen (S330) der Mischung in den Wärmetauscher Pumpen (S320) der Mischung mittels einer Schneckenpumpe umfasst.

9. Verfahren (300) nach einem der Ansprüche 1 bis 8, wobei das Einspeisen (S305) des BSGs und der Flüssigkeit in die Mischanordnung des Weiteren Bestimmen (S300) eines Gewichts des in die Mischanordnung eingespeisten BSGs und Einspeisen (S305) einer Menge der Flüssigkeit basierend auf dem bestimmten Gewicht des BSGs umfasst.

10. Verfahren (300) nach einem der Ansprüche 1 bis 9, des Weiteren umfassend nach dem Erwärmen der Mischung:
Trocknen (S340) der Mischung, um ein getrocknetes BSG-Produkt zu bilden, und
Mahlen (S345) des getrockneten BSG-Produkts, um ein Mehl zu bilden.

11. Verfahren (300) nach einem der Ansprüche 1 bis 10, wobei der BSG seinen Ursprung in Saaten hat, die ausgewählt sind aus einer Gruppe bestehend aus Gerste, Weizen, Roggen, Mais, Reis, Hafer und Kombinationen davon.

12. Verfahren (300) nach einem der Ansprüche 1 bis 11, wobei der BSG Partikel mit einer Abmessung in einem Bereich von 100 bis 4000 µm umfasst.

## Revendications

1. Procédé (300) permettant de réduire une quantité de micro-organismes dans des drêches de brasseries, BSG, le procédé comprenant :
l'introduction (S305) d'un liquide et des BSG dans un agencement de mélange,
le mélange (S310), au moyen de l'agencement de mélange, du liquide et des BSG pour former un mélange,
l'introduction (S330) du mélange dans un échangeur de chaleur, et
le chauffage (S335), au moyen de l'échangeur de chaleur, du mélange pendant une durée prédéterminée dans une plage de 30 à 90 secondes à une température prédéterminée dans une plage de 127 à 140 °C de telle sorte que la quantité de micro-organismes dans les BSG soit réduite, dans lequel
l'introduction (S305) comprend l'introduction du liquide et des BSG dans l'agencement de mélange de telle sorte que la teneur en matières solides du mélange est dans une plage de 11 % à 17 % en poids du mélange,
les BSG et le liquide sont introduits en continu dans l'agencement de mélange pendant que le mélange traverse l'échangeur de chaleur, car il s'agit d'un processus en continu.

2. Procédé (300) selon l'une quelconque des revendications 1 à 3, dans lequel une teneur en matières solides des BSG est dans une plage de 20 % à 40 % en poids des BSG.

3. Procédé (300) selon la revendication 1 ou 2, dans lequel le mélange (S310) du liquide et des BSG comprend l'agitation (S315), au moyen d'un agitateur, du liquide et des BSG.

4. Procédé (300) selon l'une quelconque des revendications 1 à 3, dans lequel le mélange (S310) du liquide et des BSG comprend la mise en circulation (S325), au moyen d'une boucle de circulation, du mélange hors et dans l'agencement de mélange, de telle sorte que la formation du mélange soit facilitée.

5. Procédé (300) selon la revendication 4, dans lequel la mise en circulation (S325) comprend le pompage (S320), au moyen d'une pompe à vis, du mélange.

6. Procédé (300) selon l'une quelconque des revendications 1 à 5, comprenant en outre l'introduction d'un agent augmentant la viscosité dans le liquide et les BSG, de telle sorte qu'une viscosité du mélange soit augmentée.

7. Procédé (300) selon l'une quelconque des revendications 1 à 6, dans lequel le liquide est l'eau.

8. Procédé (300) selon l'une quelconque des revendications 1 à 7, dans lequel l'introduction (S330) du mélange dans l'échangeur thermique comprend le pompage (S320), au moyen d'une pompe à vis, du mélange.

9. Procédé (300) selon l'une quelconque des revendications 1 à 8, dans lequel l'introduction (S305) des BSG et du liquide dans l'agencement de mélange consiste en outre à déterminer (S300) un poids des BSG étant introduites dans l'agencement de mélange et à introduire (S305) une quantité de liquide sur la base du poids déterminé des BSG.

10. Procédé (300) selon l'une quelconque des revendications 1 à 9, comprenant en outre, après le chauffage du mélange,
le séchage (S340) du mélange pour former un produit de BSG séché, et
le broyage (S345) du produit de BSG séché pour former une farine.

11. Procédé (300) selon l'une quelconque des revendications 1 à 10, dans lequel les BSG proviennent de graines choisies dans un groupe constitué par l'orge, le blé, le seigle, le maïs, le riz, l'avoine et des combinaisons de ceux-ci.

12. Procédé (300) selon l'une quelconque des revendications 1 à 11, dans lequel les BSG comprennent des particules ayant une dimension dans une plage allant de 100 à 4 000 µm.
